# EUROPEAN PATENT SPECIFICATION

(11) **EP 3 278 433 B1**
(45) Date of publication and mention of the grant of the patent: **12.02.2020**
(21) Application number: 16721232.3
(22) Date of filing: 31.03.2016
(51) Int. Cl.: H02K 33/16, H02K 7/075

(54) **MAGNETIC MOTOR**
MAGNETISCHER MOTOR
MOTEUR MAGNÉTIQUE

(30) Priority: 02.04.2015 IT RM20150135
(43) Date of publication of application: 07.02.2018
(73) Proprietor: Monza, Thomas, 20030 Senago (MI) (IT); Rebosio, Riccardo, 20813 Bovisio-Masciago (MB) (IT); Molteni, Giacomo, 22032 Albese con Cassano (CO) (IT)
(72) Inventor: Monza, Thomas, 20030 Senago (MI) (IT); Rebosio, Riccardo, 20813 Bovisio-Masciago (MB) (IT); Molteni, Giacomo, 22032 Albese con Cassano (CO) (IT)
(74) Representative: Galassi, Alessandro
(86) International application number: PCT/IB2016/051825
(87) International publication number: WO 2016/157110

(56) References cited:
- GB-A- 439 820
- JP-B1- 5 204 340
- US-A1- 2007 090 697
- US-A1- 2014 265 649
- US-A1- 2014 292 114
- US-A1- 2014 306 532
- US-A1- 2015 048 695

## Description

### Field of the invention

The present invention concerns a motor and in detail concerns a magnetically operating motor.

### Background technique

It's known from long time that the use of endothermic motors for traction, in detail in vehicles and in aircrafts. Said endothermic motors exploit the energy of a fuel, like for example gasoline, the Diesel oil or the kerosene, for producing by means of a combustion an increase of volume of gases within a chamber of combustion to the end of moving an assembly rod-crank capable of causing a rotation of a transmission shaft.

The motors of a known type have drawbacks.

In detail, they produce relevant amount of exhaust gases and cannot be therefore activated in closed ambient.

Nonetheless, in the last years are many progresses with magnetic materials and with the efficiency of the batteries have been made. This has partially drawn the attention toward hybrid systems of powering wherein fully or partially the endothermic portion of the motor has been supplanted or anyway associated with an electric type portion.

Furthermore the today's endothermic motors concentrate their operation on the single installation. Different problems, among which first of all their weight and the difficulty of a synchronization in case of coupling, render therefore very difficult their use in couple or anyway in modular installation. On the other hand, the motor-gearbox assembly, considered the overall size, could not be installed modularly on a vehicle of normal size, and would have significant problems when installed on big commercial vehicles.

Document US 20140292114 teaches a method and apparatus for converting between electric and mechanical energy, that comprises a plurality of pistons actuated by means of coaxial driving. The motor shown there has a low efficiency, principally given since the pistons during their stroke are coaxial and introduced within of the cylinder-shaped electromagnets, that envelope them. Nonetheless, the motor according US 20140292114 has a central slotted rod source of significant frictions during the operation.

A further electromagnet motor provided with an electromagnet axially arranged with the piston is disclosed in document JP 5 204 340 B1.

Document US 2014/306532 A1 discloses a linear alternator, producing the alternate movement of a reciprocating shaft through stator coils arranged coaxially with the shaft and surrounding said shaft; the magnets are not arranged frontally with respect to the reciprocating shaft.

The scope of the present invention is that of describing a magnetic motor that allows powering vehicles without gases production, and that as well has an optimal distribution of torque, and that as well in its operation presents the least possible amount of frictions in its components.

In detail, the scope of the present invention is that of describing a motor that allows powering any type of user that would need a tracting torque like for example and in a non-limiting extent vehicles, generators of electric current, pumps.

### Summary of the invention

According to the present invention is realized a magnetic motor, which comprises a plurality of pistons radially arranged in starred configuration respective to a central rotating shaft and mechanically connected thereto by means of a rod-crank system so as to render said pistons axially movable along an own linear path between a first and a second position of stroke end producing on said shaft a rotation in a same sense of non-alternative rotation; said magnetic motor being furthermore characterized in that it comprises a plurality of polar expansions, positioned radially on the body of said motor in an axial direction respective to said linear path of each of said pistons; said polar expansions comprising each one an own electromagnet impulsively fed and susceptible of exerting, when electrically powered, a force of attraction or frontal repulsion on said piston along said linear path producing a rotation of said shaft by means of said rod-crank assembly; said polar expansions being in a number equal to the number of said pistons, and being positioned frontally respective to said pistons.

Said rod-crank system comprises a plurality of cranks having a respective eccentric hole onto which is rotationally hinged, for each crank, a motion distribution disc realizing a conversion of from a rotational motion on said shaft to an alternative linear one on said pistons, and wherein a plurality of rods of said rod-crank system are enclosed in a sandwich formed by a couple of motion distribution discs respectively positioned over and below said rods and wherein said shaft is interrupted in correspondence of said sandwich.

In a preferred and non-limiting embodiment of said motor, is furthermore present a electric powering circuit, comprising at least a temporizing unit, electrically connected with each one of the said polar expansions of said motor and feeding said polar expansions with a predefined sequence of voltage impulses or electric current susceptible of making said shaft turn in a same sense of rotation over 360°.

In a preferred and non-limiting embodiment of said motor said predefined sequence of voltage impulses or current, is progressive and contiguous polar expansions are fed sequentially.

In a preferred and non-limiting embodiment of said motor, said predefined sequence of voltage impulses or current is sent sequentially to a first and a second polar expansion between the which is present at least a further polar expansion and causes the rotation of said shaft in a same sense of direction on 360° at least.

In a preferred and non-limiting embodiment of said motor, is present a supporting body developing on a plane being substantially to the plane along which said pistons on said linear path alternatively move, said supporting body comprising a plurality of distancing elements extending along a direction orthogonal respective to said plane.

Said pistons comprise a portion of head realized in a material susceptible of being magnetically attracted or repulsed by said electromagnet in case it is excited, and comprise furthermore a substantially cylindrical lateral surface comprising a plurality of recesses apt to house spheroidal means of sliding on guides.

In a preferred and non-limiting embodiment of said motor, said pistons slide within a boxed chamber having a plurality of guides arranged around to an imaginary circumference within said chamber, and wherein said guides extend parallel respective to the direction of sliding of said piston and comprise a contact portion.

In a preferred and non-limiting embodiment of said motor, said spheroidal means are introduced within said guides in correspondence of said contact portion, that recalls the shape of said spheroidal means.

In a preferred and non-limiting embodiment of said motor, said piston comprises within said recesses of the springs suitable for pushing said spheroidal means against said guides of the said boxed chamber.

Said couple of motion distribution discs rotates on planes parallel to said plane of linear motion of the rods and rotates respective to an axis parallel to the axis of said shaft; said rotation of said motion distribution discs takes place eccentrically respective to the axis of said shaft.

The motor generates on said shaft a torque moment, and wherein said torque moment has a ripple having a plurality of peaks proportional to a number of polar expansions which are present in the motor itself, the number of peaks of said ripple being constant for each complete rotation of said shaft.

There are furthermore current regulating means feeding said polar expansions with a reduced current respective to a constant value producing a reduction of said peaks of couple into the rotation of said shaft.

According to the present invention is furthermore realized an assembly of motors, characterized in that it comprises a plurality of magnetic motors according to the present invention, and furthermore being characterized in that said motors are coupled having the respective shafts solidly jointed along a same axis having each said starred configuration of pistons linearly sliding along orthogonal directions respective to the direction overall detected by the assembly of said shafts.

In a preferred and non-limiting embodiment of said assembly, said polar expansions of a first magnetic motor of said assembly of magnetic motors are angularly staggered respective to said polar expansions of a second magnetic motor of said assembly of magnetic motors.

In a preferred and non-limiting embodiment of said assembly, said polar expansions of each motor of said assembly are electrically fed for producing a rotation of the plurality of shafts in a same sense of rotation.

### Description of the figures

The invention is hereinafter described referring to a preferred and non-limiting embodiment, and with the aid of the annexed figures wherein:
- Figure 1 shows a tridimensional representation of the magnetic motor object of the present invention;

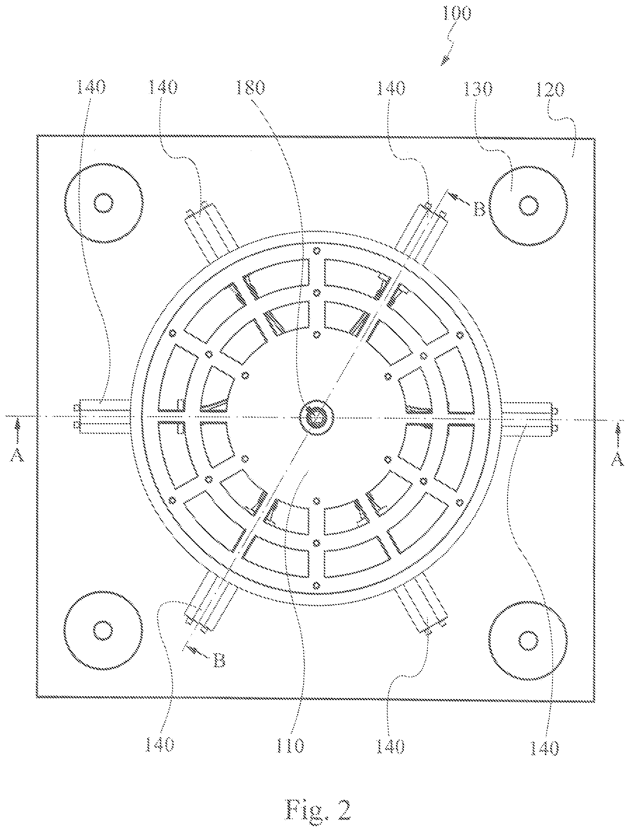

- Figure 2 shows a plane view of the magnetic motor object of the present invention, from which it is possible to show its body with structure suitable to be coupled modularly;
- Figure 3 and figure 4 show respective section views of the magnetic motor object of the present invention;
- Figure 5 shows a lateral view of a piston being part of the magnetic motor object of the present invention;
- Figure 6 shows a lateral view of the piston being part of the magnetic motor object of the present invention;
- Figure 7 shows a plane view of the piston of the figure 5 and 6;
- Figure 8 shows a lateral view of a first portion of crank of the magnetic motor object of the present invention;
- Figure 9 shows a plane view of the crank of figure 8;
- Figure 10 shows a rod being part of the magnetic motor object of the present invention;
- Figure 11 and figure 12 show respectively a first and a second plane and lateral view of a second portion of crank being part of the magnetic motor object of the present invention;
- Figure 13 shows a interjunction element of the crank group being part of the magnetic motor object of the present invention;
- Figure 14 shows the interjunction element of figure 13 observed in lateral view;
- Figure 15 shows a detail in lateral view of a bearing to be introducted within the interjunction element of figure 14;
- Figure 16 and figure 17 show respectively a perspective view and a front section view of a sliding chamber of the piston in an alternative embodiment of the magnetic motor object of the present invention;
- Figure 18 shows a front view of a piston according to the alternative embodiment of the magnetic motor object of the present invention;
- Figure 19 shows a perspective view of the piston of figure 18;
- Figure 20 shows a section view of the piston of figure 18;
- Figure 21 shows a section view of a detail of mechanical coupling between part of the piston and the sliding chamber of the same in the alternative embodiment of the magnetic motor object of the present invention;
- Figure 22 shows an operation scheme of the motor object of the present invention; and
- Figure 23 shows a trend of torque of the magnetic motor object of the present invention.

### Detailed description of the invention

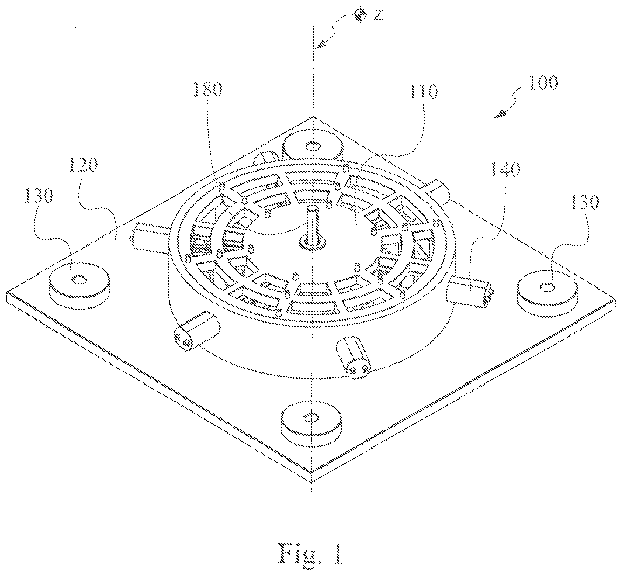

With reference to figure 1 with the reference number 100 is shown in its complex a magnetic motor.

The motor 100 is a motor with polar expansions 140 radially arranged around a circumference in whose center is present a shaft 180 put in rotation by a plurality of pistons.

The polar expansions 140 protrude and are arranged outside respective to a central circular body 110, that in turn is fixed on a supporting plane 120 provided of distancing elements 130 suitable to realize a modular coupling of many motors 100 as represented in figure 1 and described in the course of the present invention.

In detail, the modular coupling takes place juxtaposing many motors 100 on a same axis coinciding with the axis Z of rotation of the shaft 180, preferably with the polar expansions 140 staggered so as to optimize the distribution of couple of rotation of the shaft 180.

The polar expansions 140 contain a electromagnet and are provided, each one, of a couple of electric power terminals suitable for receiving electric current from a timing circuit that impulsively feeds them on a precise sequence in accordance to the position and to the disposition of the rods and cranks, so as to be capable of impressing a continuous motion to the shaft 180.

In the annexed figures, the polar expansions 140 are six, but said number shall not be intended as limiting. In fact, even if with six polar expansions the motor could be substantially fed on three phases, the number of polar expansions can be both decreased or increased respective to what is shown without for this losing the characteristic of operation of the motor. Anyway an increase of the polar expansions can advantageously contribute to a more effective and significant peak-free trend of torque on the motor.

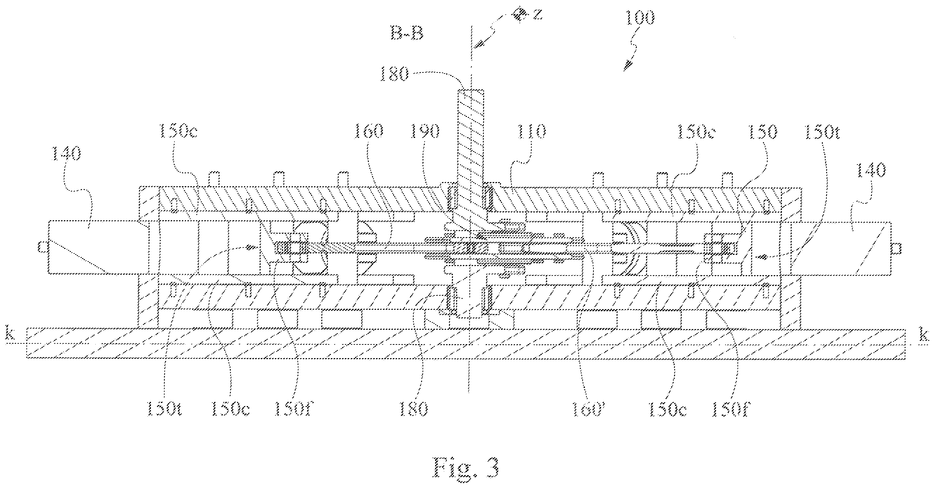

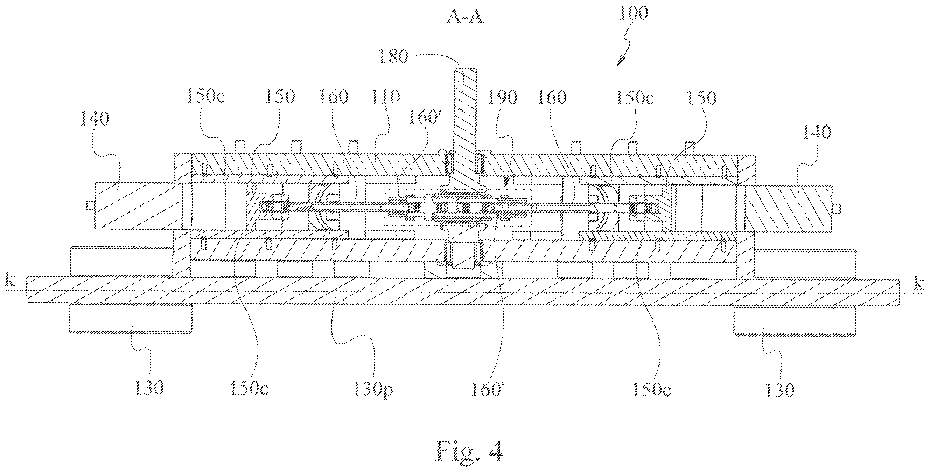

As it is shown in figures 3 and 4, inside the magnetic motor object of the present invention, in detail within the central circular body 110 there are a plurality of pistons 150 linearly sliding in a sliding chamber delimited by guides 150c preferably upper and lower. The sliding of the pistons 150 takes place along a linear path of approximation and farthening respective to the respective polar expansion 140.

The pistons are jointed in correspondence of a their rear pin 150f with a rod 160 provided with a couple of holes suitable for hinging it with the piston itself and with a respective crank 190 group that is positioned in the center of the motor object of the present invention and that allows therefore transferring the motion from linear to directly on the shaft 180 that rotates therefore along the axis Z that results orthogonal respective to the plane onto which linearly move all the pistons 150.

In head to each piston is present a magnet, that acts in combination with the polar expansions in case fed with a repulsion force reciprocal capable of moving the piston 150 towards the center of the motor itself.

The motor 100 object of the present invention operates by means of a mechanism of electromagnetic repulsion between a piston and a portion of head wherein is included the electromagnet of the polar expansion that is of a frontal type.

For the purposes of the present invention, as "front repulsion" it is meant the repulsion wherein the piston, during the its linear sliding, always rests axially outer with respect to the electromagnet.

In detail, from the central body 110 upper depart a first portion of shaft 180 and lower a second portion of shaft 180 so as to allow advantageously the modular coupling of many magnetic motors along the axis Z.

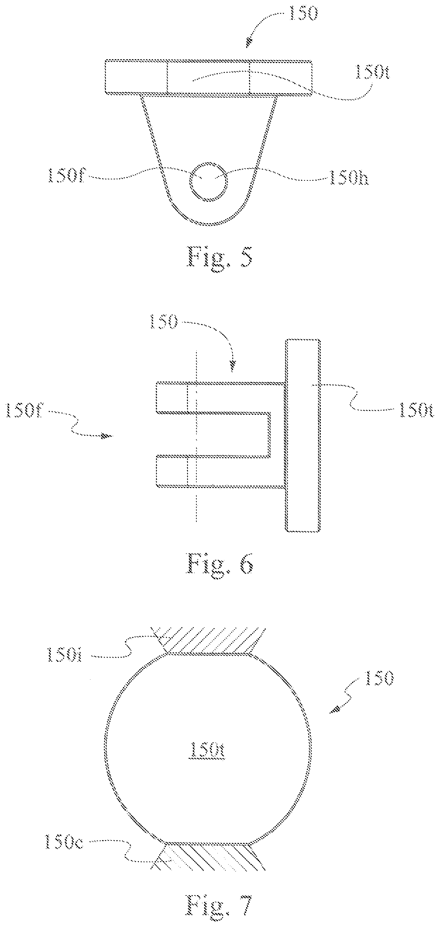

In detail each piston has, as it is shown in figure 5, in figure 6, in figure 7, a portion of head 150t having a front flat wall and a back portion jointed with the rear fork 150f of union to the rod 160, that has two elements each provided of a hole 150h for the passage of the pin or connection and union jack with the hole of the rod 160.

At least the portion of head 150t of the piston is such as to be magnetically attractable and/or repelled by the electromagnet that is present in the polar expansion 140. Optionally, the portion of head 150t of the piston comprises one or more magnets. Said configuration increases the repulsion force in case the electromagnets are electrically impulsively fed. Observed in plane view, the piston 150 has a non-round head, but formed with two portions 150p tapered and linear, so as to be more easily couplable on the guides 150c of the sliding chamber of the same. The friction of the piston is therefore limited on predefined sub-zones of the head portion 150t.

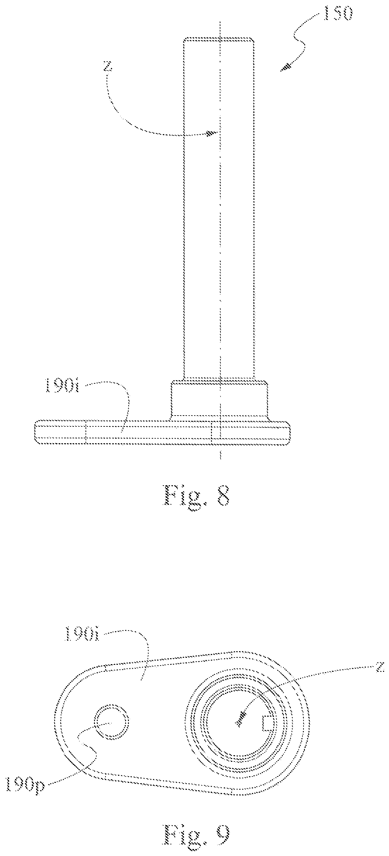

As it is shown in figure 8 and in figure 9, the crank 190 group comprises first of all an upper portion of cranks 190i that laterally protrude respective to the axis Z of rotation of the shaft 180, in detail in a direction orthogonal respective to this last. In detail, upper cranks 190i are oriented orthogonally respective to the shaft 180.

As it is shown in figure 9, each crank 190i has an ovoid profile and is provided with a peripheral hole 190p, whose axis is parallel to axis Z, in such a way to allow the passage of a pin or junction jack with a hole of the rod 160 that is opposed to the one which is mechanically engaged on the piston 150.

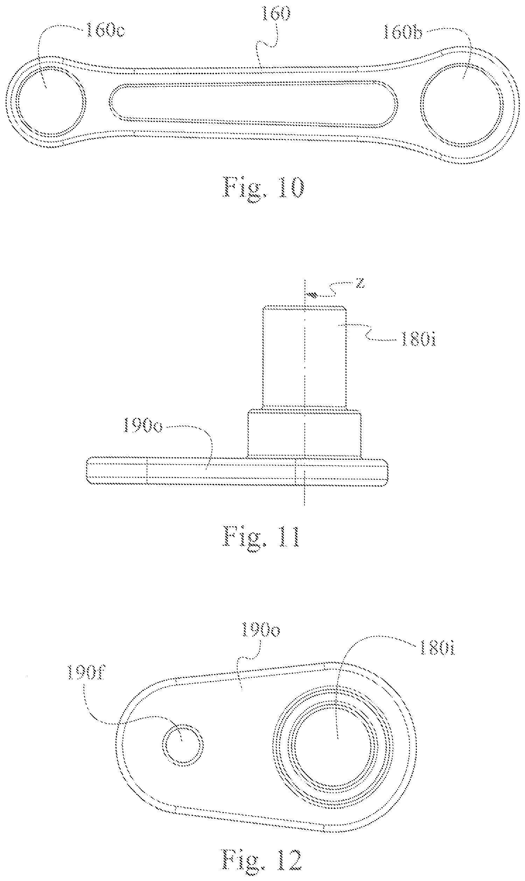

Figure 10 shows a rod of the magnetic motor object of the present invention. As previously mentioned, said rod 160 comprises a central tapered portion that ends on the its ends with a first hole 160b orthogonally oriented respective to the direction of maximum extension of the body of the rod itself and that is conceived for allowing the fixing of the jack or union pin to the crank 190 group, and a second hole 160c it also being oriented orthogonally respective to to the direction of maximum extension of the body of the rod itself , for engaging the jack or junction pin to the fork 150f of the piston 150.

In detail also the lower portion of the cranks 190 group comprises cranks 180i provided with a body extending orthogonally respective to to the direction of the shaft 180 and that, keeping the same ovoid form of the upper portion, has an outlet hole 190f that is arranged in such a way to be axially aligned with its upper reciprocal so as to advantageously allow joining the body of the rod with one jack or pin that lays parallel respective to to the shaft 180.

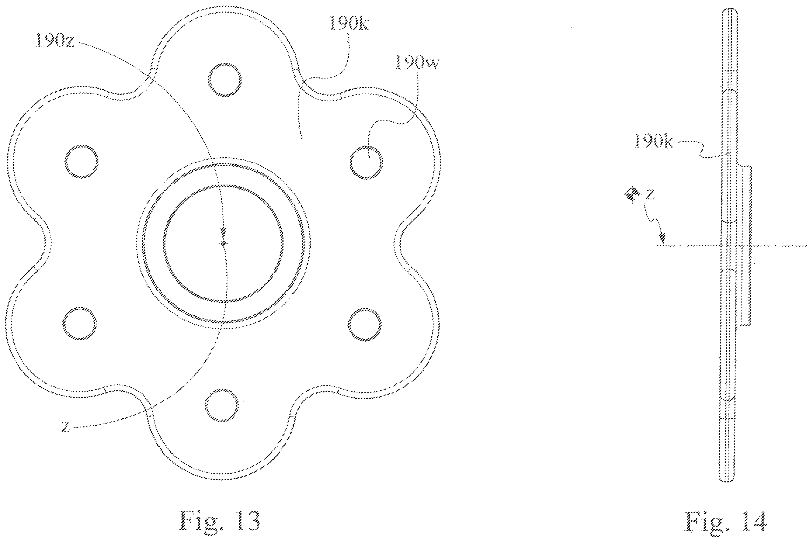

As it is shown in figure 13 and in figure 14, the cranks group 190 further comprises a couple of petal discs of interjunction 190k, one being positioned over the ending portions of the rod and one below the ending portion of the rod. Each petal disc of interjunction, that realizes a disc of motion distribution from the shaft 180 towards the pistons by means of a conversion from eccentric rotation to linear motion, comprises a central hole 190z within which a pin in turn engaged in the peripheral holes of the cranks 190 is inserted, and a plurality of holes peripheral 190w each one in a respective lobe of said petal disc; the holes peripheral 190w are parallel respective to the central hole 190z and are conceived for allowing the passage of jacks or hinging pins of the rods with the holes 190f and 190p of the cranks.

The assembly of the two petal discs of interjunction realizes a sandwich that includes the ending portions of the various rods (in the annexed figures in a number equal to six like the number of the polar expansions); the interjunction discs rigidly rotate with the shaft 180 eccentrically around axis Z while the rods kept by the interjunction discs are made sliding linearly along the respective chambers.

This happens since the interjunction discs are not directly keyed on the shaft 180 but are keyed on the pin positioned on the holes of the cranks 190, that being eccentic, make the interjunction discs rotate eccentrically respective to the axis Z, but anyway on a plane such that the various axes of the peripheral holes 190w are kept parallel to the axis Z.

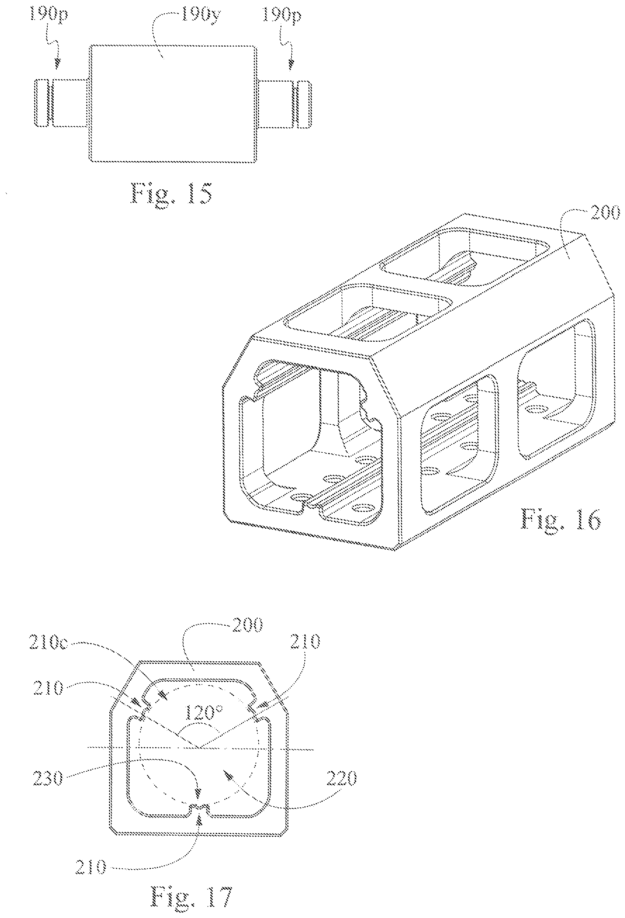

Figure 15 shows a pin that in fact is introduced into the rod, in detail into its first hole.

The pin comprises a first central portion 190y of a bigger size and comprising a lateral circular surface realized in a material such as to realize a low friction with the circular inner portion of the first hole 160b of the rod during the oscillatory rotational motion that creates between the two elements during the linear sliding of the piston 150 into the chamber.

The ending portions 190p of the pin are tapered respective to the central portion 190y, having therefore a diameter lower respective to this last part. They are conceived for being introduced within the peripheral holes of the petal disc and of the upper and lower crank. A pin substantially of the same type is introduced in the holes peripheral of the cranks 191 so that its central portion 190y engages into the central hole of the petal discs of interjunction.

Each one of the two ending portions 190p has an annular recess that allows for introducing a retaining forelock in the respective holes, useful for maintaining the overall equilibrium of the system.

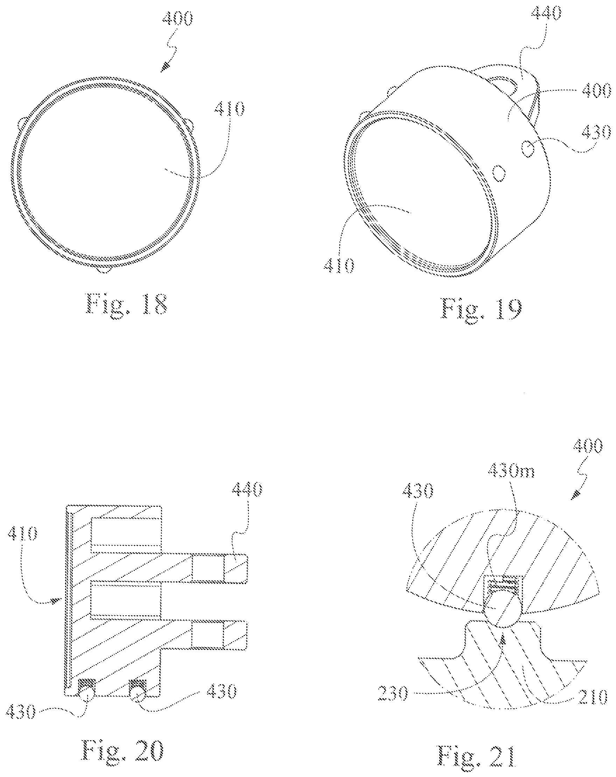

Figures 16, 17 show a sliding chamber of an alternative embodiment respective to the previously exposed one. Figures 18-20 instead, show an alternative embodiment of a piston being part of the motor object of the present invention.

The sliding chamber 200 has a boxed structure provided with windows and of a central cavity within which the piston 400 slides. In detail within the central cavity there are many guides 210 parallel and oriented in detail along the direction detected by the sliding of the piston.

The guides 210 are arranged around to an imaginary circumference 210c being oriented at 120° the a respective to to the other. The guides define therefore three contact zones with the piston 400.

As it can be seen in figure 17 and more in detail in figure 21, each guide has a contact portion 230 with a section shaped as an arc of circumference, therefore forming a concavity inside the chamber.

In said section with arc of circumference there are small balls 430 that protrude from the lateral wall of the piston 400.

As it is shown in figures 18-20, the lateral wall of the piston 400 defines a portion of cylinder upper delimited by the front planar wall 410 made with a material apt to be attracted or repulsed magnetically by the polar expansions.

The small balls 430 are contained in recesses radially positioned on the lateral wall of the piston within which there are further helical springs 430m that exert a pushing action on the small balls 430 outwards said lateral wall.

In use, as it is shown in figure 21 those small balls 430 are exactly they that enter in contact with the concave portion of the guides 210 realizing a mechanical piston-guide engagement means that avoids that a big portion of lateral wall enters into contact with the guide itself.

The motor object of the present invention operates as follows.

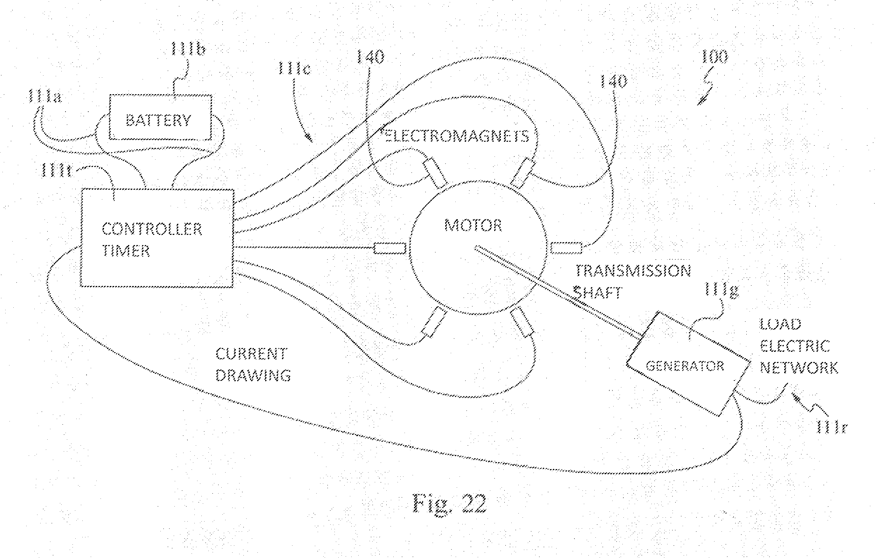

As it is shown in figure 22, the polar expansions 140 are connected by means of wires 111c to a timer controller 111t whose scope is that of powering the polar expansions in a sequence so as to make the shaft 180 rotate with a continuous motion in a same sense of rotation (therefore, non-alternative).

The timer controller 111t is electrically connected by means of its terminals of input of powering 111a to a power supply 111b that preferably anyway in a non-limiting extent is a battery.

The electromagnets can be therefore powered by a Lithium-ion battery, Lithium Phosphate (of a cylindrical shape) or Lithium Polymer (prismatic) which can be recharged by the exceeding power generated from the motor or by alternative means (solar integration or others).

At the moment of powering the electromagnet into the polar expansion, the corresponding piston is attracted or repelled with a significant force, and without coming into contact with any mechanical component.

In detail, the electromagnet is configured in such a way to release its charge instantaneously on the piston. This advantageously allows for replicating the action that there is with the combustion into the combustion chamber of a traditional internal combustion engine, and advantageously allows a pushing towards the center of the associated piston sufficiently strong and impulsive to allow, in combination with the pushing received by the rest of the pistons, an uniform rotation of the motor.

Today's technologies allow for realizing the motor object of the present invention in a configuration "with short stroke", that through the use of cranks sligthly laterally extended respective to to the axis Z, allow of reducing the average speed of sliding of the piston 150 into the chamber, with a consequent lengthening of operative life.

The motor object of the present invention through the shaft 180 can be connected to a generator or dynamo 111g in turn connected to an electric network 111r.

In such a way it can be used for generating a mechanical motion as well as for generating in return an electric current, exactly through the generator or dynamo 111g, that can resend said current towards the controller for its powering.

The motor object of the present invention therefore allows for generating the motion through a starred configuration of the pistons, almost like it takes place with the traditional endothermic motors, without anyway being characterized by gaseous emissions that would be inevitable by means of fuel combustion.

The magnetic motor being stellar, has the big advantage of a relevant constructive simplicity, and is axially very compact, feature that characterizes it from a normal electric motor wherein for high powers it would need an axially-directed extension significantly greater. Furthermore, being the shaft 180 very short, the vibrations of the motor object of the present invention are significantly reduced respective to a conventional motor.

The motor object of the present invention can be realized in a substantially opened configuration, with a cooling far more effective cooling respective to a traditional radial flux motor, wherein the rotoric cooling is source of problems since it is included in the stator. Furthermore, by modularly coupling many motors object of the present invention, it is advantageously possible to operate in such a way to reduce the ripple of torque that produces on the shaft 180.

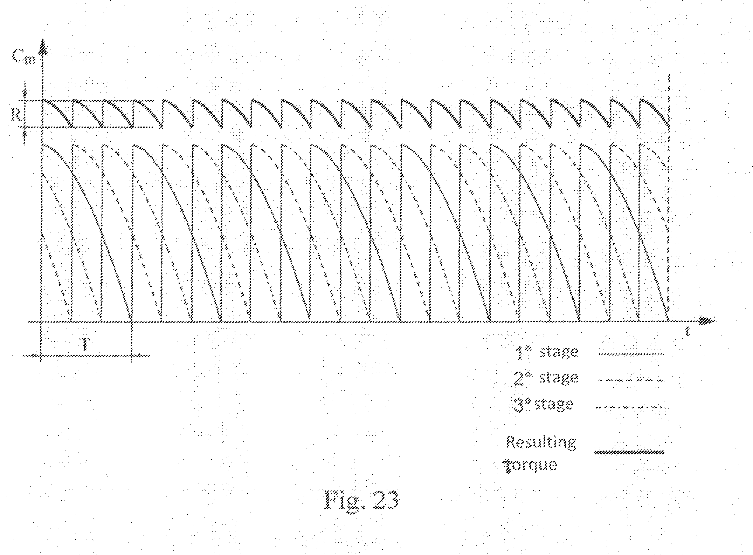

As shown in figure 23, with six polar expansions two by two counterposed, therefore on three phases, on the fundamental period T of rotation of the shaft 180 there are three peaks of torque.

By alternating many phases or many motors coupled on the same shaft, not only it would be a multipliable power, but also the torque ripple would be lower.

Advantageously, furthermore, the motor object of the present invention has the possibility of varying the performances of the motor according to the features of the electromagnets (also during the operation: current magnitude variator).

By varying the intensity of current by means of means of regulation of the intensity of current feeding the various polar expansions 140 also the peaks of torque can be advantageously reduced; this, even if it can bring to an average couple slightly lower, produces anyway an overall more uniform torque over the entire period T of rotation of the shaft 180.

Furthermore the axial compactness of the motor object of the present invention renders it suitable to be installed also in combination with other ones, realizing a modular assembly anyway with a reduced volume that can bring to multiply the values of power and torque that can be delivered without complex settings in synchrony of operation as it takes place for example in case of endothermic motors.

Furthermore, the impulsive action of the electromagnets on the pistons pushes in a way substantially similar to that of the combustion, and the pushing action uniformly absorbed on the central spider bearing that facilitates the motion generation and advantageously keeps the motor without frictions.

In principle, being a motor without gearbox, the compactness the motor object of the present invention is significantly higher respective to that of an endothermic motor.

It is finally clear that to the object of the present invention can be applied additions, adaptations or variants being obvious for a skilled person without for this departing from the scope of protection provided by the claims in annex.

For example, there is the possibility of substituting the pistons with guides with a ball recirculation carriage and then fixing the magnet and the rod directly to the carriage.

## Claims

1. Magnetic motor (100), comprising a plurality of pistons (150; 400), wherein said pistons (150; 400) comprise a head portion realized in a material susceptible of being magnetically attracted or repelled and are radially arranged in starred configuration respective to a central shaft (180) rotating and mechanically connected thereto by means of a system a rod-crank (160; 190) so as to render said pistons (150; 400) axially movable along an own linear path between a first and a second position of stroke end producing on said shaft (180) a rotation in a same sense of non-alternative rotation; said magnetic motor (100) further comprising plurality of polar expansions (140), positioned radially on the body of said motor in an axial direction respective to said linear path of each of said pistons (150; 400); said polar expansions (140) comprising each one an own electromagnet impulsively fed susceptible of exerting, when electrically powered, a force of attraction or front repulsion on said piston (150; 400) along said linear path producing a rotation of said shaft (180) by means of said rod-crank (160-190) assembly; said polar expansions (140) being in a number equal to the number of said pistons (150; 400),
the magnetic motor (100) being **characterized in that** the polar expansions are positioned frontally respective to said pistons (150, 400), **in that** said rod-crank (160; 190) system comprises a plurality of cranks (190) having a respective eccentric hole (190p; 190f) onto which is rotationally hinged, for each crank (190) a motion distribution disc (190k) realizing a conversion of motion from rotary on said shaft (180) to alternative linear on said pistons (150; 400), and wherein a plurality of rods (160) of said system rod-crank (160, 190) are enclosed in a sandwich formed by a couple of motion distribution discs (190k) respectively positioned over and below said rods (160) and wherein said shaft (180) is interrupted in correspondence of said sandwich, and **in that** it comprises current regulating means feeding said polar expansions (140) with a current decreased respective to a constant value producing a reduction of the peaks of torque into the rotation of said shaft (180).

2. Magnetic motor (100) according to claim 1, comprising furthermore an electric powering circuit (111t, 111b, 111c), comprising at least a temporizing unit (111t) electrically connected with each one of the said polar expansions (140) of said motor (100) and feeding said polar expansions (140) with a predefined sequence of voltage impulses or electric current susceptible of making said shaft (180) turn in a same sense of direction over 360°.

3. Magnetic motor (100) according to claim 2, wherein said predefined sequence of voltage or current impulses, is progressive and contiguous polar expansions (140) are sequentially fed.

4. Magnetic motor (100) according to claim 2, wherein said predefined sequence of voltage or current impulses is sent sequentially to a first and a second polar expansion (140) between which is present at least a further polar expansion (140) and causes the rotation of said shaft (180) in a same sense of direction over 360° at least.

5. Magnetic motor (100) according to any of the preceding claims, **characterized in that** it comprises a supporting body (120) developing on a plane (K-K) substantially parallel to the plane along which said pistons (150; 400) alternatively move on said linear path, said supporting body (120) comprising a plurality of spacing elements extending along a direction orthogonal respective to said plane.

6. Magnetic motor (100) according to any of the preceding claims, further comprising a substantially cylindrical lateral surface comprising a plurality of recesses apt to house spheroidal means (430) of sliding on guides (210).

7. Magnetic motor (100) according to any of the preceding claims, wherein said pistons (400) slide within a boxed chamber (200) having a plurality of guides (210) arranged around to an imaginary circumference within said chamber, and wherein said guides (210) extend parallel respective to the direction of sliding of said piston (150) and comprise a contact portion (230).

8. Magnetic motor (100) according to claim 6 and claim 7, **characterized in that** said spheroidal means (430) are introduced within said guides (210) in correspondence of said contact portion (230), that recalls the shape of said spheroidal means (430), and wherein said piston (400) comprises within said recesses springs (430m) suitable for pushing said spheroidal means against said guides (210) of said chamber boxed (200).

9. Magnetic motor according to claim 1, **characterized in that** said torque of motion distribution discs (190w) rotates on planes parallel to said plane of linear motion of the rods (160) and rotates respective to an axis parallel to the axis of said shaft (180); said rotation of said motion distribution discs (190k) takes place eccentrically respective to the axis of said shaft (180).

10. Magnetic motor according to any of the preceding claims, **characterized in** being designed for generating on said shaft (180) a torque moment, and wherein said torque moment has a ripple having a plurality of peaks proportional to a number of polar expansions (140) present in the motor itself, the number of peaks of said ripple being constant for each complete rotation of said shaft (180).

11. Assembly of motors, **characterized in that** it comprises a plurality of magnetic motors (100) according to any of the preceding claims 1-10, and furthermore **characterized in that** said motors are coupled having the respective shafts (180) solidly jointed along a same axis having each said starred configuration of pistons (150; 400) linearly sliding along directions orthogonal respective to the direction overall defined by the assembly of said shafts (180).

12. Assembly of magnetic motors according to claim 11, **characterized in that** said polar expansions (140) of a first magnetic motor (100) of said assembly of magnetic motors are angularly staggered respective to said polar expansions (140) of a second magnetic motor (100) of said assembly of magnetic motors.

13. Assembly of magnetic motors according to any of the preceding claims 11, 12, **characterized in that** said polar expansions (140) of each motor (100) of said assembly are fed electrically for producing a rotation of the plurality of shafts (180) in a same sense of rotation.

## Patentansprüche

1. Magnetischer Motor (100), umfassend eine Mehrzahl von Kolben (150; 400), wobei die Kolben (150; 400) einen Kopfabschnitt umfassen, welcher in einem Material ausgeführt ist, welches dafür empfänglich ist, magnetisch angezogen oder abgestoßen zu werden, und radial in einer gestirnten Konfiguration bezüglich einer zentralen Welle (180) angeordnet sind, welche rotiert und mechanisch damit mittels eines Systems einer Stangen-Kurbel (160; 190) verbunden ist, um die Kolben (150; 400) axial entlang eines eigenen linearen Pfads zwischen einer ersten und einer zweiten Position eines Hubendes beweglich zu machen, welches an der Welle (180) eine Rotation in dem gleichen Sinn einer nicht-alternierenden Rotation erzeugt; wobei der magnetische Motor (100) ferner eine Mehrzahl von polaren Ausdehnungen (140) umfasst, welche an dem Körper des Motors in einer axialen Richtung bezüglich des linearen Pfads jedes der Kolben (150; 400) radial positioniert sind; wobei die polaren Ausdehnungen (140) jeweils einen eigenen Elektromagneten umfassen, welcher impulsiv versorgt dafür empfänglich ist, wenn elektrisch angetrieben, eine Anziehungskraft oder eine vordere Abstoßung auf den Kolben (150; 400) entlang des linearen Pfads auszuüben, wobei eine Rotation der Welle (180) mittels der Stangen-Kurbel (160 - 190) Anordnung erzeugt wird; wobei die polaren Ausdehnungen (140) in einer Anzahl gleich der Anzahl der Kolben (150; 400) bereitgestellt sind, wobei der magnetische Motor (100) **dadurch gekennzeichnet ist, dass** die polaren Ausdehnungen frontal bezüglich der Kolben (150, 400) positioniert sind, dadurch, dass das Stangen-Kurbel (160; 190) System eine Mehrzahl von Kurbeln (190) umfasst, welche entsprechende exzentrische Löcher (190p; 190f) aufweisen, an welchen für jede Kurbel (190) eine Bewegung-Verteilungsscheibe (190k) angelenkt ist, welche eine Umwandlung einer Bewegung von einer Rotation an der Welle (180) zu einer alternierenden linearen an den Kolben (150; 400) durchführt, und wobei eine Mehrzahl von Stangen (160) der System-Stangen-Kurbel (160, 190) in einer Einfassung eingeschlossen sind, welche durch ein Paar von Bewegung-Verteilungsscheiben (190k) gebildet ist, welche entsprechend über und unter den Stangen (160) positioniert sind, und wobei die Welle (180) im Einklang mit der Einfassung unterbrochen ist, und dadurch, dass er Strom-Regulierungsmittel umfasst, welche die polaren Ausdehnungen (140) mit einem Strom versorgen, welcher entsprechend einem konstanten Wert gesenkt ist, wobei eine Reduktion der Spitzen eines Drehmoments in die Rotation der Welle (180) erzeugt wird.

2. Magnetischer Motor (100) nach Anspruch 1, ferner umfassend eine elektrische Antriebsschaltung (111t, 111b, 111c), umfassend wenigstens eine Abwarteeinheit (111t), welche mit jeder der polaren Ausdehnungen (140) des Motors (100) elektrisch verbunden ist und die polaren Ausdehnungen (140) mit einer vordefinierten Sequenz von Spannungsimpulsen oder elektrischem Strom versorgt, empfänglich, um die Welle (180) in einem gleichen Richtungssinn über 360° drehen zu lassen.

3. Magnetischer Motor (100) nach Anspruch 2, wobei die vordefinierte Sequenz von Spannungs- oder Stromimpulsen progressiv ist und zusammenhängende polare Ausdehnungen (140) sequenziell versorgt werden.

4. Magnetischer Motor (100) nach Anspruch 2, wobei die vordefinierte Sequenz von Spannungs- oder Stromimpulsen sequenziell an eine erste und eine zweite polare Ausdehnung (140) gesendet wird, zwischen welchen wenigstens eine weitere polare Ausdehnung (140) vorhanden ist, und die Rotation der Welle (180) in einem gleichen Richtungssinn über wenigstens 360° hervorgerufen wird.

5. Magnetischer Motor (100) nach einem der vorhergehenden Ansprüche, **dadurch gekennzeichnet, dass** er einen Halterungskörper (120) umfasst, welcher sich an einer Ebene (K-K) im Wesentlichen parallel zu der Ebene entwickelt, entlang welcher sich die Kolben (150; 400) an dem linearen Pfad alternierend bewegen, wobei der Halterungskörper (120) eine Mehrzahl von Beabstandungselementen umfasst, welche sich entlang einer Richtung orthogonal bezüglich der Ebene erstrecken.

6. Magnetischer Motor (100) nach einem der vorhergehenden Ansprüche, ferner umfassend eine im Wesentlichen zylindrische laterale Fläche, welche eine Mehrzahl von Ausnehmungen umfasst, welche dazu geeignet sind, kugelige Mittel (430) eines Gleitens an Führungen (210) aufzunehmen.

7. Magnetischer Motor (100) nach einem der vorhergehenden Ansprüche, wobei die Kolben (400) innerhalb einer eingepackten Kammer (200) gleiten, welche eine Mehrzahl von Führungen (210) aufweist, welche um einen imaginären Umfang innerhalb der Kammer angeordnet sind, und wobei sich die Führungen (210) parallel bezüglich der Richtung eines Gleitens des Kolbens (150) erstrecken und einen Kontaktabschnitt (230) umfassen.

8. Magnetischer Motor (100) nach Anspruch 6 und Anspruch 7, **dadurch gekennzeichnet, dass** die kugeligen Mittel (430) innerhalb der Führungen (210) im Einklang mit dem Kontaktabschnitt (230) eingeführt sind, welcher die Form der kugeligen Mittel (430) nachbildet, und wobei der Kolben (400) innerhalb der Ausnehmungen Federn (430m) umfasst, welche zum Drücken der kugeligen Mittel gegen die Führungen (210) der eingepackten Kammer (200) geeignet sind.

9. Magnetischer Motor nach Anspruch 1, **dadurch gekennzeichnet, dass** das Moment von Bewegung-Verteilungsscheiben (190w) an Ebenen parallel zu der Ebene einer linearen Bewegung der Stangen (160) rotiert und bezüglich einer Achse parallel zu der Achse der Welle (180) rotiert; wobei die Rotation der Bewegung-Verteilungsscheiben (190k) bezüglich der Achse der Welle (180) exzentrisch stattfindet.

10. Magnetischer Motor nach einem der vorhergehenden Ansprüche, **dadurch gekennzeichnet, dass** er dazu ausgelegt ist, an der Welle (180) ein Drehmoment zu erzeugen, und wobei das Drehmoment eine Welligkeit aufweist, welche eine Mehrzahl von Spitzen proportional zu einer Anzahl von polaren Ausdehnungen (140) aufweist, welche in dem Motor selbst vorhanden sind, wobei die Anzahl von Spitzen der Welligkeit für jede komplette Rotation der Welle (180) konstant ist.

11. Anordnung von Motoren, **dadurch gekennzeichnet, dass** sie eine Mehrzahl von magnetischen Motoren (100) nach einem der Ansprüche 1 bis 10 umfasst, und ferner **dadurch gekennzeichnet, dass** die Motoren gekoppelt sind, wobei sie die entsprechenden Wellen (180) fest entlang einer gleichen Achse verbunden aufweisen, welche jeweils die gestirnte Konfiguration von Kolben (150; 400) linear entlang Richtungen orthogonal bezüglich der Richtung gleitend aufweisen, welche insgesamt durch die Anordnung von Wellen (180) definiert ist.

12. Anordnung von magnetischen Motoren nach Anspruch 11, **dadurch gekennzeichnet, dass** die polaren Ausdehnungen (140) eines ersten magnetischen Motors (100) der Anordnung von magnetischen Motoren winkelversetzt bezüglich der polaren Ausdehnungen (140) eines zweiten magnetischen Motors (100) der Anordnung von magnetischen Motoren sind.

13. Anordnung von magnetischen Motoren nach einem der Ansprüche 11, 12, **dadurch gekennzeichnet dass** die polaren Ausdehnungen (140) jedes Motors (100) der Anordnung elektrisch zum Erzeugen einer Rotation der Mehrzahl von Wellen (180) in einem gleichen Rotationssinn versorgt werden.

## Revendications

1. Moteur magnétique (100), comprenant une pluralité de pistons (150 ; 400), lesdits pistons (150 ; 400) comprenant une partie de tête réalisée dans un matériau susceptible d'être magnétiquement attiré ou répulsé et sont radialement disposés en configuration en étoile par rapport à un arbre (180) central tournant et mécaniquement relié à ceux-ci à l'aide d'un système bielle-manivelle (160 ; 190) afin de rendre lesdits pistons (150; 400) axialement mobiles le long d'un trajet linéaire propre entre une première et une seconde position de l'extrémité de course produisant sur ledit arbre (180) une rotation dans un même sens de rotation non alternative; ledit moteur magnétique (100) comprenant en outre une pluralité d'expansions polaires (140), positionnées radialement sur le corps dudit moteur dans un sens axial par rapport audit trajet linéaire de chacun desdits pistons (150 ; 400) ; lesdites expansions polaires (140) comprenant chacune un électroaimant propre alimenté par impulsion susceptible d'exercer, lorsque qu'alimenté électriquement, une force d'attraction ou une répulsion vers l'avant sur ledit piston (150 ; 400) le long dudit trajet linéaire produisant une rotation dudit arbre (180) à l'aide dudit ensemble bielle-manivelle (160-190) ; lesdites expansions polaires (140) étant d'un nombre égal au nombre desdits pistons (150 ; 400),
le moteur magnétique (100) étant **caractérisé en ce que** les expansions polaires sont positionnées frontalement par rapport auxdits pistons (150 ; 400), dans ledit système bielle-manivelle (160 ; 190) comprenant une pluralité de manivelles (190) ayant un trou excentrique respectif (190p ; 190f) sur lequel est articulé de manière à pouvoir tourner, pour chaque manivelle (190) un disque de distribution de mouvement (190k) réalisant une conversion de mouvement depuis la rotation sur ledit arbre (180) vers un mouvement linéaire alternatif sur lesdits pistons (150 ; 400), et où une pluralité de bielles (160) dudit système de bielle-manivelle (160 ; 190) sont prises en sandwich formé par un couple de disques de distribution de mouvement (190k) respectivement positionnés sur et en dessous desdites bielles (160) et où ledit arbre (180) est interrompu en correspondance dudit sandwich, et **en ce qu'**il comprend des moyens de régulation de courant alimentant lesdites expansions polaires (140) avec un courant réduit par rapport à une valeur constante produisant une réduction des pics de couple à l'intérieur de la rotation dudit arbre (180).

2. Moteur magnétique (100) selon la revendication 1, comprenant en outre un circuit d'alimentation électrique (111t, 111b, 111c), comprenant au moins une unité de temporisation (111t) électriquement reliée à chacune desdites expansions polaires (140) dudit moteur (100) et alimentant lesdites expansions polaires (140) d'une séquence prédéfinie d'impulsions de tension ou de courant électrique susceptibles de faire tourner ledit arbre (180) dans un même sens de direction sur 360°.

3. Moteur magnétique (100) selon la revendication 2, dans lequel ladite séquence prédéfinie d'impulsions de tension ou de courant, est progressive et des expansions polaires (140) contiguës sont séquentiellement alimentées.

4. Moteur magnétique (100) selon la revendication 2, dans lequel ladite séquence prédéfinie de tensions ou d'impulsions de courant est envoyée séquentiellement vers une première et une seconde expansion polaire (140) entre laquelle est présente au moins une expansion polaire (140) supplémentaire et amène la rotation dudit arbre (180) dans un même sens de direction sur 360° au moins.

5. Moteur magnétique (100) selon l'une quelconque des revendications précédentes, **caractérisé en ce qu'**il comprend un corps de support (120) se développant sur un plan (K-K) sensiblement parallèle au plan le long duquel lesdits pistons (150 ; 400) se déplacent alternativement sur ledit trajet linéaire, ledit corps de support (120) comprenant une pluralité d'éléments d'espacement s'étendant le long d'un sens orthogonal par rapport audit plan.

6. Moteur magnétique (100) selon l'une quelconque des revendications précédentes, comprenant en outre une surface latérale sensiblement cylindrique comprenant une pluralité de renfoncements aptes à loger des moyens sphéroïdaux (430) de coulissement sur des guides (210).

7. Moteur magnétique (100) selon l'une quelconque des revendications précédentes, dans lequel lesdits pistons (400) coulissent à l'intérieur d'une chambre boîte (200) ayant une pluralité de guides (210) disposés autour d'une circonférence imaginaire à l'intérieur de ladite chambre, et où lesdits guides (210) s'étendent parallèles par rapport au sens de coulissement dudit piston (150) et comprennent une partie de contact (230).

8. Moteur magnétique (100) selon la revendication 6 et la revendication 7, **caractérisé en ce que** lesdits moyens sphéroïdaux (430) est introduit à l'intérieur desdits guides (210) en correspondance de ladite partie de contact (230), qui rappelle la forme desdits moyens sphéroïdaux (430), et où ledit piston (400) comprend à l'intérieur desdits renfoncements des ressorts (430m) convenant pour pousser lesdits moyens sphéroïdaux contre lesdits guides (210) de ladite chambre boîte (200).

9. Moteur magnétique selon la revendication 1, **caractérisé en ce que** ledit torque des disques de distribution de mouvement (190w) tourne sur des plans parallèles audit plan de mouvement linéaire des bielles (160) et tourne par rapport à un axe parallèle à l'axe dudit arbre (180) ; ladite rotation desdits disques de distribution de mouvement (190k) a lieu de manière excentrée par rapport à l'axe dudit arbre (180).

10. Moteur magnétique selon l'une quelconque des revendications précédentes, **caractérisé en ce qu'**il est conçu pour générer sur ledit arbre (180) un moment de torque, et où ledit moment de torque présente une ondulation ayant une pluralité de pics proportionnels à un nombre d'expansions polaires (140) présentes dans le moteur lui-même, le nombre de pics de ladite ondulation étant constant pour chaque rotation complète dudit arbre (180).

11. Ensemble de moteurs, **caractérisé en ce qu'**il comprend une pluralité de moteurs magnétiques (100) selon l'une quelconque des revendications précédentes 1 à 10, et **caractérisé en outre en ce que** lesdits moteurs sont accouplés ayant les arbres (180) respectifs joints de manière solide le long d'un même axe ayant chacun ladite configuration en étoile des pistons (150 ; 400) coulissant linéairement le long de sens orthogonaux par rapport au sens globalement défini par l'ensemble desdits arbres (180).

12. Ensemble de moteurs magnétiques selon la revendication 11, **caractérisé en ce que** lesdites expansions polaires (140) d'un premier moteur magnétique (100) dudit ensemble de moteurs magnétiques sont empilées de manière angulaire par rapport auxdites expansions polaires (140) d'un second moteur magnétique (100) dudit ensemble de moteurs magnétiques.

13. Ensemble de moteurs magnétiques selon l'une quelconque des revendications précédentes 11, 12, **caractérisé en ce que** lesdites expansions polaires (140) de chaque moteur (100) dudit ensemble sont alimentées électriquement pour produire une rotation de la pluralité d'arbres (180) dans un même sens de rotation.
